# EUROPEAN PATENT SPECIFICATION

(11) **EP 2 847 814 B1**
(45) Date of publication and mention of the grant of the patent: **22.07.2020**
(21) Application number: 13799817.5
(22) Date of filing: 07.05.2013
(51) Int. Cl.: H01M 4/90, H01M 4/86, H01M 8/02, H01M 4/92, H01M 8/083

(54) **ANODE ELECTRO-CATALYSTS FOR ALKALINE MEMBRANE FUEL CELLS**
ANODENELEKTROKATALYSATOREN FÜR ALKALI-MEMBRANBRENNSTOFFZELLEN
ÉLECTROCATALYSEURS ANODIQUES POUR PILES À COMBUSTIBLE À MEMBRANE ALCALINE

(30) Priority: 07.05.2012 US 201261643509 P
(43) Date of publication of application: 18.03.2015
(73) Proprietor: Elbit Systems Land and C4I Ltd., 4250712 Netanya (IL)
(72) Inventor: DEKEL,Dario, PO Box 13396 Or Akiva (IL); GOTTESFELD, Shimshon, Niskayuna, NY 12309 (US)
(74) Representative: Pearl Cohen Zedek Latzer Baratz UK LLP
(86) International application number: PCT/US2013/039853
(87) International publication number: WO 2013/184269

(56) References cited:
- EP-A2- 0 664 175
- JP-A- 2007 273 278
- JP-A- 2008 041 291
- JP-A- 2011 149 080
- US-A- 3 062 909
- US-A1- 2010 216 052
- US-A1- 2011 123 908
- BARTROM, A. M. ET AL.: 'The direct formate fuel cell with an alkaline anion exchange membrane' JOURNAL OF POWER SOURCES vol. 214, 22 April 2012, pages 68 - 74, XP028501984
- DU, CHUNYU ET AL.: 'Nanoporous PdNi Alloy Nanowires As Highly Active Catalysts for the Electro-Oxidation of Formic Acid' ACS APPLIED MATERIALS & INTERFACES vol. 3, no. 2, 2011, pages 105 - 109, XP055172302
- CHEN, LUYANG ET AL.: 'Nanoporous PdNi Bimetallic Catalyst with Enhanced Electrocatalytic Performances for Electro-oxidation and Oxygen Reduction Reactions' ADVANCED FUNCTIONAL MATERIALS vol. 21, no. 2, 2011, pages 4364 - 4370, XP055172303

## Description

### RELATED APPLICATIONS

This application is related to U.S. Ser. No. 12/710,539, filed Feb. 23, 2010 for a "Catalyst Coated Membrane (CCM) and Catalyst Film/Layer for Alkaline Membrane Fuel Cells and Methods of Making Same" now U.S. Pat. No. 8,304,368. This application is also related to and claims priority to U.S. Ser. No. 61/643,509, filed May 7, 2012, for "Anode Electro-Catalysts for Alkaline Membrane Fuel Cells".

### FIELD OF INVENTION

The present invention relates generally to alkaline membrane fuel cells, and more particularly to an anode electro-catalysts for alkaline membrane fuel cells.

### BACKGROUND

A fuel cell converts chemical energy from fuel (e.g., hydrogen) into electricity through an electrochemical process requiring an oxidizing agent (e.g., oxygen from air). There are many types of fuel cells; but they all are believed to contain an anode, a cathode, and an electrolyte. Electrons are drawn from the anode to the cathode through an external circuit (i.e., the load). The electrolyte allows charged ions (but not electrons) to move between the anode and the cathode within the fuel cell. The electrolyte can be in different forms, such as liquid or membrane.

In a hydrogen/air alkaline membrane fuel cell (AMFC), hydrogen is oxidized at the anode by the following electrochemical process (hydrogen oxidation reaction, or HOR):

H₂ + 2OH⁻ → 2H₂O + 2e⁻

producing water and electrons. The generated electrons flow through an external circuit (i.e., the load) to arrive at the cathode and are there consumed in the following electrochemical process (oxygen reduction reaction, or ORR):

½ O₂ + H₂O + 2e⁻ →2OH⁻,

producing hydroxide ions. The cathode generated hydroxide ions travel through the membrane electrolyte of the AMFC to arrive at the anode. The chemical reactions on the anode and the cathode will run continuously as long as the gaseous reactants (H2 and O2) are supplied. The net cell reaction consumes oxygen and hydrogen and produces water, generating electrons to drive an external load. Heat is also generated as a by-product.

A fuel cell electrode is described in US32062909A. A nickel powder production method is disclosed in JP2011149080A. US2010216052A1 discloses a Catalyst Coated Membrane (CCM) and Catalyst Film/Layer for alkaline membrane fuel cells. US2011123908A1 discloses a method for preparing nano-sized metal particles on a carbon support.

EP 0664175 A2 discloses coated palladium fine powder comprising palladium particles of a mean particle size in the range of 0.1 to 1.0 µm which are coated with nickel or alloy of nickel with other metal.

### SUMMARY OF INVENTION

This invention is related to an earlier filed application, namely,: "Catalyst Coated Membrane (CCM) And Catalyst Film/Layer For Alkaline Membrane Fuel Cells And Methods Of Making Same", U.S. Ser. No. 12/710,539, filed Feb. 23, 2010, now U.S. Pat. No. 8,304,368 which discloses the preparation of a catalyst coated membrane (CCM) for use in an alkaline membrane fuel cell (AMFC) comprising: an anion conducting alkaline membrane; and a catalyst layer applied adjacent the membrane, wherein the catalyst layer comprises: (a) a metal nano-powder; and (b) an ion conducting ionomer In particular, the earlier application disclosed that silver-containing nano-powders may be used as a metal catalyst component, particularly for the AMFC cathode. The earlier application also discloses fabrication of an anode catalyst layer for an AMFC using unsupported, metal nano-particles mixed with an ion-conducting ionomer.

A particular aspect of the present invention is an extension of the family of metal nano-powders employed for such catalyst layer preparation to intermixed active and non-active metal nano-particles.

Use of unsupported metal nano-particles as catalysts in fuel cells is not believed to be the usual choice of materials. This is because supported, typically carbon-supported metal catalysts are a preferred choice in most cases. However, the AMFC presents a high challenge of limited ionic conductivity within the catalyst layer at some given ionomer content and, consequently, the thinness of the catalyst in an AMFC is of special value. To meet the goal of packaging a sufficiently large catalyst surface area within a catalyst layer of minimum thickness, an unsupported layer of metal nano-particles has a clear advantage over carbon-supported metal catalysts. Consequently, the average distance traveled by the ionic species through the former type layer will be shorter and the ionic conduction losses which are dominant in AMFCs can thereby be lowered. On the other hand, a challenge posed by the dense packing of catalyst layers made of unsupported, nano-sized metal catalysts, is insufficient pore networks required for effective transport of ionic charge, water and gaseous reactants. Resolution of this challenge is a prerequisite for successful implementation of such catalyst layers in AMFC technology and it calls for optimized catalyst compositions achieved by optimized content of the ionomeric component in the layer and, as taught in this Invention, additions of non-active nano-particles to the formulation of the catalyst layer. In general, in an aspect, the invention provides a catalyst for an alkaline membrane fuel cell (AMFC) comprising a mixture of: a catalytically active component made of highly dispersed, palladium nano-particles, and a catalytically inactive component made of highly dispersed, unsupported nickel metal nano-particles, wherein the unsupported nickel nano-particles provide support for the palladium nano-particles as to increase the effective surface area of the palladium nano-particles accessible for the transport of water and/or oxygen.

In general, in yet another aspect, the invention provides an alkaline membrane fuel cell (AMFC) that includes an anode having an anode catalyst layer, a cathode having a cathode catalyst layer, and an anion-conducting membrane electrolyte, wherein the catalyst layer comprises a catalyst ink comprising a solvent, dissolved ionomer and a dispersed unsupported metal catalyst according to the invention.

Various aspects of the invention can provide effective and low cost anode catalysts for alkaline membrane fuel cells (AMFCs).

These and other capabilities of the invention, along with the invention itself, will be more fully understood after a review of the following figures, detailed description, and claims.

### BRIEF DESCRIPTION OF THE FIGURES

FIG. 1 show voltage-current density curve and power-current density curve of an AMFC with a Pd anode catalyst according to one embodiment of the invention.
FIG. 2 show voltage-current density curve and power-current density curve of an AMFC with a Pd-Ni alloy anode catalyst according to one embodiment of the invention.
FIG. 3 show voltage-current density curve and power-current density curve of a Pd-Ni mechanical mixture anode catalyst according to one embodiment of the invention.

### DETAILED DESCRIPTION

Embodiments of the invention can provide an anode catalysts in an AMFC having effective catalytic characteristics and yet relatively low cost. Other embodiments are within the scope of the invention.

Catalysts are commonly used in chemical reactions and in fuel cells to improve reaction rates and increase fuel cell performance. The performance of catalysts can be improved when they are supported by another material (e.g., carbon), which helps to provide high surface area and reduce agglomeration of catalysts. But supported catalysts may be less stable than unsupported catalysts because the catalyst support (e.g., carbon) may be vulnerable to external environment, for example suffering oxidative mass loss , particularly when near open circuit conditions and under higher cell temperatures. Thus, using unsupported catalysts may help to extend the fuel cell's lifespan.

Noble metals (e.g., precious metals such as platinum (Pt)) have been used as an anode catalysts in fuel cells because these metals generally have a high adsorption affinity to H atoms and a relatively low adsorption affinity to O atoms and/or other oxygen-containing species. These attributes are desirable for a HOR process because high concentration and proper stabilization of adsorbed H atoms improve the rate of the HOR process whereas surface O atoms and other oxygen-containing surface species deactivate the surface vs. the HOR. However, the high cost and price volatility of precious metals (e.g., Pt at $500-$2500/oz) has hindered the development of fuel cell technologies based on such catalysts. Unalloyed base metals (e.g., iron (Fe) or nickel (Ni)), although inexpensive, generally do not work well as an anode catalysts because oxygen-free surfaces are difficult to be sustained for these metals , especially when the fuel cell is under current.

We have discovered that Palladium (Pd), which is also a noble metal, can be an effective low-cost alternative to Pt as AMFC anode catalyst. Pd's affinity to surface oxygen is slightly higher than that of Pt; but its market price is currently only about 1/3 that of Pt.

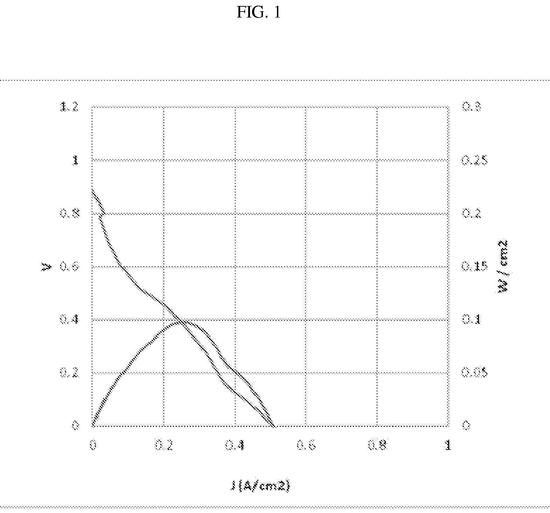

FIG. 1 demonstrates testing results of using unalloyed Pd nano-particles as an anode catalyst in a hydrogen/air Pt-free AMFC. Unsupported silver alloy is used as a cathode catalyst in this hydrogen/air AMFC. Both voltage-current density curve and power-current density curve are shown in FIG. 1.

As illustrated in FIG. 1, significant catalytic activity is obtained , showing that the unalloyed Pd nano-particles can catalyze the HOR process on the anode. The power density peaks in this case at 0.1 W/cm²; the maximum current density can reach 0.5 A/cm².

Some specific alloying of Pd can be used to improve the performance of the anode catalyst. The inventors pursued an approach described before for platinum cathode catalysts in acidic (proton conducting) polymer electrolyte fuel cells (PEFCs). See, for example, Jia X. Wang, Hiromi Inada, Lijun Wu, Yimei Zhu, YongMan Choi, Ping Liu, Wei-Ping Zhou and Radoslav R. Adzic J. Am. Chem. Soc., 2009, 131 (47), pp 17298-17302

One example of alloying Pd is to alloy Pd with a non-noble metal (e.g., cobalt (Co) or nickel (Ni)). The alloyed particles can have a mono-atomic surface (shell) very rich in Pd and a core relatively rich in the non-noble metal (e.g., Co or Ni). The Pd-shell-on-Ni-core structure can be achieved by galvanic displacement of Ni atoms on a Ni particle by Pd atoms, as reported by R. Adzic of BNL in the 2011 AMR meeting of the DOE , in Washington, DC. This "shell-on-core" structure can help to make the shell atoms (e.g., Pd) more "noble" than those same atoms on the surface of an unalloyed Pd metal particle. The improved "nobility" of such a shell-on-core structure comes about because the Pd shell atoms , when on a nickel core, would become less prone to O species adsorption and, consequently, less deactivated by oxygen-containing species in the HOR process. Alloying (e.g., Ni-Pd) can also help lower the cost of Pd-based anode catalyst.

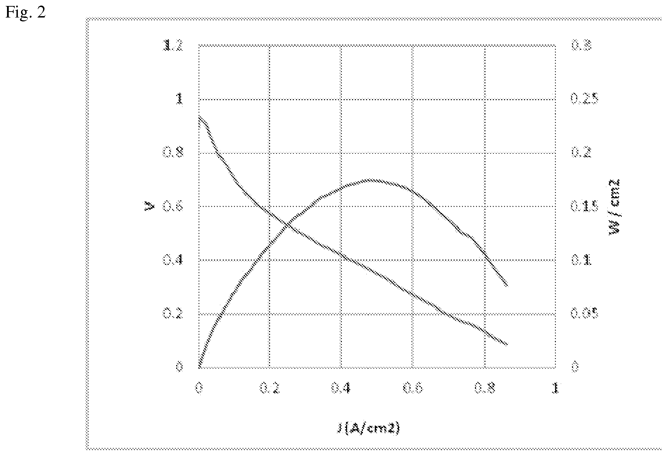

FIG. 2 demonstrates testing results for a hydrogen/air Pt-free AMFC using Ni-Pd (1:1) alloy nano particles as an anode catalyst.. Unsupported silver alloy is used as a cathode catalyst in this hydrogen/air AMFC. Both voltage-current density curve and power-current density curve are shown in FIG. 2.

As illustrated in FIG. 2, better catalytic activity is obtained, compared to using the unalloyed Pd nano particles as an anode catalysts (FIG 1). The power density peaks at 0.17 W/cm², representing a 70% increase over the unalloyed Pd catalyst; the maximum current density can reach almost 1 A/cm², representing an almost 100% increase over the unalloyed Pd catalyst.

Surprisingly, catalyst compositions achieved by simple, mechanical mixing of nano-particles of Pd with nano-particles of another metal, exhibited even better improvement of the performance over that of a neat Pd anode catalyst. One exemplary way to perform mechanical mixing is to simply mix Pd nano-particles with non-noble metal (e.g., Co or Ni) nano-particles. The mechanical mixing can be performed without any recourse to high energy during the mixing process (e.g., ball milling), for example by applying ultrasound perturbation to a dispersion of a mixture of metal particles in a solvent.

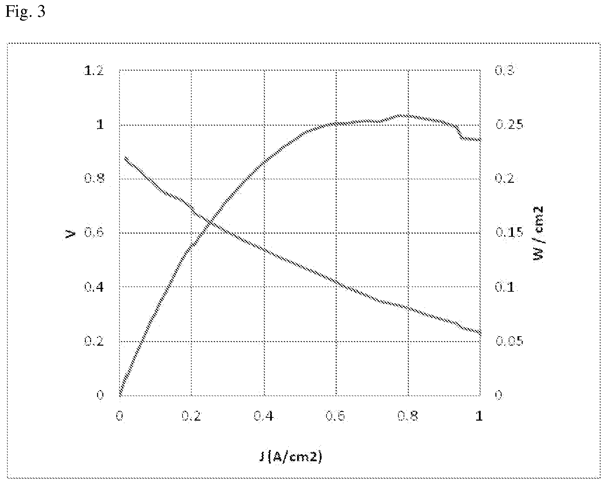

FIG. 3 demonstrates testing results for a hydrogen/air Pt-free AMFC using mechanical mixture of Ni and Pd nano particles as an anode catalyst. An unsupported silver alloy was used as a cathode catalyst in this hydrogen/air AMFC. The voltage-current density curve and power-current density curve are shown in FIG. 3 for a PdNi mechanical mixture of atomic ratio 1:1.

As seen in FIG. 3, the power density peaks at 0.26 W/cm², representing a 160% increase over the unalloyed Pd catalyst; the maximum current density can reach near 1.5 A/cm², representing an almost 200% increase over the unalloyed Pd catalyst.

Following mechanical mixing, the catalytically inactive particles (e.g., Ni) may re-define the morphology (e.g., the packing configuration) of the catalyst layer. The catalytically inactive particles of different forms and sizes may help generate a less densely packed catalyst layer which can be beneficial to the transport of water and/or oxygen through the catalyst layer. In other words, mechanical mixing of two different kinds of nano-particles may "open-up" the catalyst layer structure and generate critical transport routes. Thereby, the mechanical mixing with catalytically inactive nano-particles may serve the same function as that provided by a catalyst support (e.g., carbon), in defining the catalyst layer morphology on the micrometer scale and thereby increasing the effective (accessible) surface area of the catalytically active nano-particles. The mechanical mixing (e.g., Ni-Pd mixture) of catalytically inactive nano-particles can also help lower the cost of a Pd-based anode catalyst. The catalytically active nano-particles of a mixture can be alloyed themselves; the catalytically inactive nano-particles of a mixture can also be alloyed themselves.

Further improvements in catalytic activity may be obtained by using metal nano-rods (nano wiskers) of Ni, Co, or Fe or any of the other catalytically inactive components discussed above. These structures can be prepared by colloidal or reverse micelle routes and can be alloyed with Pd or coated with a thin layer of Pd.

The dispersed catalysts discussed above (e.g., Pd, PdNi alloy, Pd-Ni mixture) are used to prepare the catalyst ink which can be applied to an ionomeric membrane of an AMFC. The catalyst ink can be prepared without any solid component other than high surface area metal particles which can be dispersed ultrasonically in a proper solvent allowing satisfactory bonding of the catalyst ink to the surface of the anion-conducting membrane. The catalyst ink can contain an optimized weight of dissolved ionomer that recasts on application of the catalyst ink to the membrane surface. More details can be found in the aforesaid U.S. parent application U.S. Patent Application 12/710,539, titled "Catalyst Coated Membrane (CCM) and Catalyst Film/Layer for Alkaline Membrane Fuel Cells and Methods of Making Same", filed February 23, 2010, now U.S. Patent No. 8,304,368.

While the description above refers to the invention, the description may include more than one invention. In addition, although the description above sometimes uses the term "alkaline membrane fuel cell" or AMFC, the invention is not so limited. The invention disclosed herein may apply to other fuel cell technologies or other technology fields.

## Claims

1. A catalyst for an alkaline membrane fuel cell, comprising a mixture of:
a catalytically active component made of highly dispersed, palladium nano-particles, and
a catalytically inactive component made of highly dispersed, unsupported nickel metal nano-particles,
wherein the unsupported nickel nano-particles provide support for the palladium nano-particles as to increase the effective surface area of the palladium nano-particles accessible for the transport of water and/or oxygen.

2. A method of manufacturing an alkaline membrane fuel cell (AMFC), the fuel cell comprising:
an anode with an anode catalyst layer;
a cathode with a cathode catalyst layer; and
an anion-conducting membrane electrolyte,
and wherein the method of forming each catalyst layer comprises the preparation of a catalyst ink comprising a solvent, dissolved ionomer and a dispersed unsupported metal catalyst according to claim 1.

## Patentansprüche

1. Katalysator für eine alkalische Membranbrennstoffzelle, umfassend ein Gemisch aus
einer katalytisch aktiven Komponente, die aus hochdispersen Palladium-Nanopartikeln hergestellt ist, und
eine katalytisch inaktive Komponente, die aus hochdispersen, nicht geträgerten Nickelmetall-Nanopartikeln hergestellt ist, wobei die nicht geträgerten Nickel-Nanopartikel als Träger für die Palladium-Nanopartikel dienen, um die wirksame Oberfläche der Palladium-Nanopartikel, die für den Transport von Wasser und/oder Sauerstoff zugänglich ist, zu vergrößern.

2. Verfahren zum Herstellen einer alkalischen Membranbrennstoffzelle (AMFC), wobei die Brennstoffzelle Folgendes umfasst:
eine Anode mit einer Anodenkatalysatorschicht;
eine Kathode mit einer Kathodenkatalysatorschicht; und
einen anionenleitenden Membranelektrolyten,
und wobei das Verfahren zum Bilden jeder Katalysatorschicht jeweils die Herstellung einer Katalysatortinte umfasst, die ein Lösungsmittel, gelöstes Ionomer und einen dispergierten, nicht geträgerten Metallkatalysator nach Anspruch 1 umfasst.

## Revendications

1. Catalyseur pour pile à combustible à membrane alcaline, comprenant un mélange de :
un composant catalytiquement actif constitué de nanoparticules de palladium hautement dispersées, et
un composant catalytiquement inactif constitué de nanoparticules de nickel métal hautement dispersées et sans support,
dans lequel les nanoparticules de nickel sans support fournissent un support pour les nanoparticules de palladium de manière à augmenter la surface effective des nanoparticules de palladium accessibles pour le transport d'eau et/ou d'oxygène.

2. Procédé de fabrication d'une pile à combustible à membrane alcaline (AMFC), la pile à combustible comprenant :
une anode avec une couche de catalyseur d'anode ;
une cathode avec une couche de catalyseur cathodique ; et
un électrolyte à membrane conductrice d'anions,
et dans lequel le procédé de formation de chaque couche de catalyseur comprend la préparation d'une encre de catalyseur comprenant un solvant, un ionomère dissous et un catalyseur métallique sans support dispersé selon la revendication 1.
